(19) **Europäisches Patentamt / European Patent Office / Office européen des brevets**

(11) **EP 2 709 363 A1**

(12) **EUROPEAN PATENT APPLICATION**
published in accordance with Art. 153(4) EPC

(43) Date of publication:
**19.03.2014 Bulletin 2014/12**

(51) Int Cl.:
***H04N 7/32*** (0000.00)

(21) Application number: **12800566.7**

(22) Date of filing: **12.06.2012**

(86) International application number:
**PCT/JP2012/064996**

(87) International publication number:
**WO 2012/173109 (20.12.2012 Gazette 2012/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.06.2011 JP 2011131126**

(71) Applicant: **Nippon Telegraph And Telephone Corporation**
**Tokyo 100-8116 (JP)**

(72) Inventors:
• **BANDOH Yukihiro**
**Musashino-shi**
**Tokyo 180-8585 (JP)**
• **MATSUO Shohei**
**Musashino-shi**
**Tokyo 180-8585 (JP)**
• **TAKAMURA Seishi**
**Musashino-shi**
**Tokyo 180-8585 (JP)**
• **JOZAWA Hirohisa**
**Musashino-shi**
**Tokyo 180-8585 (JP)**

(74) Representative: **Ahner, Philippe et al**
**BREVALEX**
**95 rue d'Amsterdam**
**75378 Paris Cedex 8 (FR)**

(54) **VIDEO ENCODING DEVICE, VIDEO DECODING DEVICE, VIDEO ENCODING METHOD, VIDEO DECODING METHOD, VIDEO ENCODING PROGRAM, VIDEO DECODING PROGRAM**

(57) A video encoding device includes means used to estimate a lower limit of a bit amount/distortion cost function when an adaptive interpolation filter (AIF) is used based on a generated bit amount and an encoding distortion amount when a region-based adaptive interpolation filter (RBAIF) is used upon selecting an optimum IF based on a bit amount/distortion cost function among a fixed interpolation filter (IF), the AIF, and the RBAIF, and means used to select an optimum IF based on a comparison of bit amount/distortion cost functions of the fixed IF and the RBAIF when the lower limit is a value greater than the bit amount/distortion cost function for the fixed IF, and selecting an optimum IF based on a comparison of bit amount/distortion functions of the fixed IF, the AIF, and the RBAIF only when the lower limit is less than or equal to the bit amount/distortion cost function for the fixed IF.

FIG. 4

**Description**

TECHNICAL FIELD

The present invention relates to a video encoding device, a video decoding device, a video encoding method, a video decoding method, a video encoding program, and a video decoding program.
Priority is claimed on Japanese Patent Application No. 2011-131126, filed June 13, 2011, the content of which is incorporated herein by reference.

BACKGROUND ART

In video encoding, in inter-frame predictive encoding (motion compensation) in which prediction between different frames is executed, a motion vector is obtained to minimize prediction error power by referring to already decoded frames, orthogonal transform/quantization on a residual signal is performed, and further encoded data is generated through entropy encoding. Because of this, a reduction of prediction error power is essential to increase encoding efficiency and a highly precise prediction method is necessary.
Tools used to increase the precision of many inter-frame predictions have been introduced in a video coding standard scheme. One tool is fractional pixel precision motion compensation. This is a method of performing the above-described inter-frame prediction using a motion amount less than or equal to that of an integer pixel such as 1/2 pixel precision and 1/4 pixel precision. For example, it is possible to refer to a fractional pixel position of a maximum 1/4 pixel unit in the standard H.264/advanced video coding (AVC). In order to refer to the fractional pixel position, it is necessary to generate a pixel value at the same position. An interpolated image generating method using a linear filter is prescribed. A filter prescribed in the standard H.264 is a linear filter having a fixed filter coefficient. An interpolation filter using the fixed coefficient is abbreviated as "IF" in the following description. When a pixel of 1/2 precision is interpolated for a target pixel, interpolation is performed using a total of 6 integer pixels including three pixels in each of left and right of the target pixel. Interpolation is performed using a total of 6 integer pixels including three pixels in each of an upper part and a lower part in a vertical direction. Filter coefficients are [(1, -5, 20, 20, -5, 1)/32]. After the pixel of 1/2 precision has been interpolated, the pixel of 1/4 precision is interpolated using an average value filter of [1/2, 1/2].
To improve interpolation image generation of a fractional pixel position, technology referred to as an adaptive interpolation filter (AIF) that adaptively controls a filter coefficient according to a feature of an input video has been studied (for example, see Non-Patent Document 1). The filter coefficient in the AIF is determined to minimize prediction error power (the sum of squares of prediction errors). The AIF sets a filter coefficient in units of frames. On the other hand, a region-based adaptive interpolation filter (RBAIF) in which the filter coefficient can be set for each local region within the frame in consideration of locality of an image and a plurality of filter coefficients are used within the frame has been studied.
Here, a filter coefficient calculation algorithm of the AIF will be described. A scheme of adaptively varying an IF coefficient has been proposed in Non-Patent Document 1 and is referred to as a non-separable AIF. In this scheme, a filter coefficient is determined so that prediction error power is minimized in consideration of a two-dimensional IF (a total of 36 (=6x6) filter coefficients). Although higher encoding efficiency than when a one-dimensional 6-tap fixed IF designed to be used in the standard H.264/AVC is used can be achieved, a proposal for reducing the calculation complexity due to very high calculation complexity when obtaining the filter coefficient was introduced in Non-Patent Document 2.
A technique introduced in Non-Patent Document 2 is referred to as a separable adaptive interpolation filter (SAIF), and uses a one-dimensional 6-tap interpolation filter without using the two-dimensional IF. As a procedure, first, horizontal pixels (a, b, and c in Fig. 1 of Non-Patent Document 2) are interpolated. Integer precision pixels C1 to C6 are used to determine the filter coefficient. The horizontal filter coefficient is analytically determined to minimize a prediction error power function E of Expression (1).

$$ E = \sum_{x,y} \left( S_{x,y} - \sum_{c_i} w_{c_i} \cdot P_{\widetilde{x}+c_i,\widetilde{y}} \right)^2 \qquad \cdots \cdots (1) $$

Here, S represents the original image, P represents a decoded reference image, and x and y represent positions of horizontal and vertical directions in the image. In addition, ~x = x + MVx - FilterOffset (- appears above x), where MVx is a horizontal component of a previously obtained motion vector, and FilterOffset represents an offset for adjustment (a value obtained by dividing a tap length of the horizontal filter by 2). In the vertical direction, -y = y + MVy (- appears above y), where MVy represents a vertical component of a motion vector. $wc_i$ is a horizontal filter coefficient group $c_i$ ($0 \leq c_i < 6$) to be obtained.

A process of minimizing a prediction error energy function E is independently performed for each fractional pixel position in the horizontal direction. Through this minimization process, three types of 6-tap filter coefficient groups are obtained and fractional pixels (a, b, and c in Fig. 1 of Non-Patent Document 2) are interpolated using their filter coefficients. After the pixel interpolation of the horizontal direction has been completed, a vertical interpolation process is executed. The filter coefficient of the vertical direction is determined by solving a linear problem as in the horizontal direction. Specifically, the vertical filter coefficient is analytically determined to minimize the prediction error energy function E of Expression (2).

$$E = \sum_{x,y} \left( S_{x,y} - \sum_{c_j} w_{c_j} \cdot \hat{P}_{\tilde{x},\tilde{y}+c_j} \right)^2 \qquad \cdots \cdots (2)$$

Here, S represents the original image, ^P (^ appears above P) represents an image to be interpolated in the horizontal direction after decoding, and x and y represent positions of horizontal and vertical directions in the image. In addition, -x = 4·(x+MVx) (- appears above x), where MVx represents a horizontal component of a rounded motion vector. In the vertical direction, -y = x + MVy - FilterOffset (- appears above y), where MVy represents a vertical component of the motion vector, and FilterOffset represents an offset for adjustment (a value obtained by dividing the tap length of the vertical filter by 2). $wc_j$ represents a vertical filter coefficient group $c_j$ ($0 \leq c_j < 6$) to be obtained.

The minimization process is independently executed for every fractional precision image, and 12 types of 6-tap filters are obtained. Using the filter coefficient, the remaining fractional precision pixels (d to o in Fig. 1 of Non-Patent Document 2) are interpolated. From the above, it is necessary to encode a total of 90 (= 6 x 15) filter coefficients and transmit the encoded coefficients to a decoding side.

[Document of the prior art]

[Non-Patent Documents]

Non-Patent Document 1:
Y. Vatis, B. Edler, D. Nguyen, and J. Ostermann, "Two-dimensional non-separable adaptive wiener interpolation filter for H.264/AVC," in ITU-TQ.6/SG16 VCEG, VCEG-Z17r1, Apr. 2005.
Non-Patent Document 2:
S. Wittmann and T. Wedi, "Separable adaptive interpolation filter for video coding," in IEEE International Conference on image Processing, pp. 2500 to 2503, 2008.

DISCLOSURE OF INVENTION

[Problems to be solved by the invention]

Incidentally, when an IF using the fixed coefficient, an AIF, and an RBAIF are compared, the prediction error energy is reduced in the order of the IF, the AIF, and the RBAIF. On the other hand, a bit amount representing a filter coefficient is unnecessary for the IF, and is increased in the order of the AIF and the RBAIF when the AIF and the RBAIF are compared.

Because of this, it is difficult to unconditionally say which of the IF, the AIF, and the RBAIF is superior or inferior, and it is necessary to select an optimum filter for every frame from the viewpoint of encoding efficiency considering prediction error energy and a bit amount of the filter coefficient.

As a norm for use in selection of a filter of each frame, a rate-distortion (RD) cost J, which is a weighted sum of an encoding distortion amount of a decoded signal and the total generated bit amount within the frame, is used.

$$J = D + \lambda R$$

Here, D is an encoding distortion amount of a decoded signal, R is a total generated bit amount within the frame, and $\lambda$ is a weight coefficient given from the outside. R is separable into a bit amount $\rho$ of a filter coefficient and the other bit amount r (the sum of a bit amount $r^{(e)}$ representing a prediction error, a bit amount $r^{(m)}$ representing a motion vector, and a bit amount $r^{(h)}$ representing various header information).

Hereinafter, bit amounts $R_I$, $R_A$, and $R_R$ associated with the IF, the AIF, and the RBAIF are represented as follows.

$$R_I = r_I = r_I^{(e)} + r_I^{(m)} + r_I^{(h)}$$

$$R_A = r_A + \rho_A = r_A^{(e)} + r_A^{(m)} + r_A^{(h)} + \rho_A$$

$$R_R = r_R + \rho_R = r_R^{(e)} + r_R^{(m)} + r_R^{(h)} + \rho_R$$

In the above expressions, $r_X^{(e)}$, $r_X^{(m)}$, and $r_X^{(h)}$ (X=I, A, R) respectively represent a bit amount representing a prediction error when each IF is used, a bit amount representing a motion vector, and a bit amount representing various header information. $\rho_A$ and $\rho_R$ are bit amounts of filter coefficient when the AIF and the RBAIF are used. Because the IF uses a filter coefficient of a fixed value, a bit amount of the filter coefficient is unnecessary.

When an optimum filter is selected from the IF, the AIF, and the RBAIF, each RD cost is obtained when each IF is used, and a filter in order to minimize the RD cost is selected. RD costs $J_I$, $J_A$, and $J_R$ when the IF, the AIF, and the RBAIF are used are represented by Expressions (3), (4), and (5).

$$J_I = D_I + \lambda r_I \quad \cdots \quad (3)$$

$$J_A = D_A + \lambda (r_A + \rho_A) \quad \cdots \quad (4)$$

$$J_R = D_R + \lambda (r_R + \rho_R) \quad \cdots \quad (5)$$

It is possible to achieve high encoding efficiency by selecting an IF using the RD cost as the norm. However, because the calculation of the RD cost requires a large calculation amount, how to reduce the calculation amount of the RD cost derivation is an important problem.

The present invention has been made in view of such circumstances, and an object of the invention is to provide a video encoding device, a video encoding method, and a video encoding program having an interpolation selection function capable of reducing a calculation amount necessary for selection of an IF while suppressing degradation of encoding efficiency, and a video decoding device, a video decoding method, and a video decoding program used to decode a video encoded by the video encoding device, the video encoding method, and the video encoding program.

[Means for solving the problem]

According to the present invention, there is provided a video encoding device which performs motion-compensated inter-frame prediction corresponding to fractional pixel precision, wherein the video encoding device includes a fixed IF using a coefficient of a fixed value, an AIF which adaptively sets a coefficient of the IF, and an RBAIF which adaptively sets the coefficient of the IF for each division region by dividing a frame into a plurality of regions as the IF which generates an interpolated pixel value of a fractional pixel position, the video encoding device including: a lower limit estimation unit which estimates a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and an IF selection unit which selects an optimum IF based on a comparison of bit amount/distortion cost functions of the fixed IF and the RBAIF when the lower limit is a value greater than the bit amount/distortion cost function for the fixed IF, and selects an optimum IF based on a comparison of bit amount/distortion functions of the fixed IF, the AIF, and the RBAIF only when the lower limit is less than or equal to the bit amount/distortion cost function for the fixed IF.

A video encoded in the video encoding device according to the present invention may be decoded.

According to the present invention, there is provided a video encoding method to be used in a video encoding device which performs motion-compensated inter-frame prediction corresponding to fractional pixel precision, wherein the video encoding device includes a fixed IF using a coefficient of a fixed value, an AIF which adaptively sets a coefficient of the IF, and an RBAIF which adaptively sets the coefficient of the IF for each division region by dividing a frame into a plurality of regions as the IF which generates an interpolated pixel value of a fractional pixel position, the video encoding method including: a lower limit estimation step of estimating a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and an IF selection step of selecting an optimum IF based on a comparison of bit amount/distortion cost functions of the fixed IF and the RBAIF when the lower limit is a value greater than the bit amount/distortion cost function for the fixed IF, and selecting an optimum IF based on a comparison of bit amount/distortion functions of the fixed IF, the AIF, and the RBAIF only when the lower limit is less than or equal to the bit amount/distortion cost function for the fixed IF.

A video encoded in the video encoding method according to the present invention may be decoded.

According to the present invention, there is provided a video encoding program used to cause a computer on a video encoding device which performs motion-compensated inter-frame prediction corresponding to fractional pixel precision, to execute a video encoding process, wherein the video encoding device includes a fixed IF using a coefficient of a fixed value, an AIF which adaptively sets a coefficient of the IF, and an RBAIF which adaptively sets the coefficient of the IF for each division region by dividing a frame into a plurality of regions as the IF which generates an interpolated pixel value of a fractional pixel position, the video encoding process including: a lower limit estimation step of estimating a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and an IF selection step of selecting an optimum IF based on a comparison of bit amount/distortion cost functions of the fixed IF and the RBAIF when the lower limit is a value greater than the bit amount/distortion cost function for the fixed IF, and selecting an optimum IF based on a comparison of bit amount/distortion functions of the fixed IF, the AIF, and the RBAIF only when the lower limit is less than or equal to the bit amount/distortion cost function for the fixed IF.

A video encoded in the video encoding program according to the present invention may be decoded.

[Effects of the Invention]

According to video encoding related to the present invention, because it is possible to determine whether RD cost calculation is necessary for an AIF having a small number of regions without calculating the same RD cost when an AIF having a different number of division regions is selected based on RD cost, there is an advantageous effect in that the calculation amount of the RD cost calculation can be reduced and the calculation amount for selecting an AIF can be reduced.

BRIEF DESCRIPTION OF DRAWINGS

Fig. 1 is a block diagram illustrating a configuration of an embodiment of the present invention.
Fig. 2 is a block diagram illustrating a configuration of an encoding/RD cost calculation unit using an IF illustrated in Fig. 1.
Fig. 3 is a block diagram illustrating a detailed configuration of an encoding/RD cost calculation unit of Fig. 1.
Fig. 4 is a flowchart illustrating a processing operation of a video encoding device illustrated in Fig. 1.
Fig. 5 is a flowchart illustrating a detailed operation in which the encoding/RD cost calculation unit using an IF illustrated in Fig. 1 performs a process of "performing an encoding process using the IF and calculating a generated bit amount and encoding distortion" illustrated in Fig. 4.
Fig. 6 is a flowchart illustrating a detailed operation of a process in which the encoding/RD cost calculation unit illustrated in Fig. 1 calculates the generated bit amount and encoding distortion illustrated in Fig. 4.
Fig. 7 is a flowchart illustrating a processing operation of filter coefficient calculation of an RBAIF.
Fig. 8 is a block diagram illustrating a configuration of a video transmission system.

EMBODIMENTS FOR CARRYING OUT THE INVENTION

Hereinafter, a video encoding device having an IF selection function according to an embodiment of the present invention will be described with reference to the drawings. Before details of the video encoding device are described, operation principles of the video encoding device according to an embodiment of the present invention will be described. In the present invention, a lower limit of RD cost of an AIF is estimated, it is determined whether the RD cost calculation of the AIF is necessary based on the same lower limit, the RD cost calculation of the AIF is omitted according to a determination result, and the calculation amount is reduced.

In the following description, for example, it is assumed that the RBAIF divides a frame into two regions and a filter coefficient is assigned to each division region. It is assumed that the calculation of the RD cost is performed in the order of an IF using a fixed coefficient, the AIF, and the RBAIF.

First, the RD cost $J_I$ for the IF using the fixed coefficient is calculated from the above-described Expression (3) as follows.

$$J_I = D_I + \lambda \, r_I$$

In this case, information associated with obtained inter-frame prediction (a size of a block for which prediction is performed, a motion vector, a reference image of motion compensation, and the like) is stored as motion vector-related information. An algorithm of motion estimation or the like used to obtain the above-described motion vector-related information is assumed to be given from the outside. For example, technology disclosed in Document "K. P. Lim, G. Sullivan, and T. Wiegand, 'Text description of joint model reference encoding methods and decoding concealment methods,' Technical Report R095, Joint Video Team (JVT) of ISO/IEC MPEG and ITU-T VCEG, Jan. 2006" is used.

Next, motion vector-related information is read and a region is divided based on a given division method. Further, a filter coefficient is calculated for every region using the above-described motion vector-related information.

The filter coefficient calculation is performed based on the norm of prediction error energy minimization. Details will be described later. The RD cost $J_R$ when the RBAIF obtained through such a process is used is calculated from the above-described Expression (5) as follows.

$$J_R = D_R + \lambda \, ( r_R + \rho_R )$$

Here, the lower limit of the RD cost when the AIF has been used is estimated. When the AIF is compared to the RBAIF, there is the following relationship in relation to encoding distortion.

$$D_A \geqq D_R$$

There is the following relationship in relation to all generated bit amounts

$$R_A = r_A + \rho_A = r_A^{(e)} + r_A^{(m)} + r_A^{(h)} + \rho_A,$$

and

$$R_R = r_R + \rho_R = r_R^{(e)} + r_R^{(m)} + r_R^{(h)} + \rho_R$$

within the frame. In the RBAIF and the AIF, $r_A^{(m)} = r_R^{(m)}$ if common information is used as the motion vector-related information. In terms of a bit amount representing a prediction error from the fact that the RBAIF can further reduce the prediction error than the AIF, $r_A^{(e)} \geqq r_R^{(e)}$.

Vector information can be considered to have substantially the same level.

$$r_A^{(e)} \fallingdotseq r_R^{(e)}$$

Further, because it is necessary for the RBAIF to represent a filter coefficient for each division region as additional information for the bit amount of the filter coefficient,

$$\rho_A \lessgtr \rho_R.$$

Here, the above-described inequality can be represented in the format of the next expression using $\beta \lessgtr 1$.

$$\rho_A = \beta \rho_R$$

When the RBAIF targets two division regions, the bit amount of a filter coefficient of each division region is set to be represented in the above-described format if $\beta = 0.5$ when there is no magnitude difference from the bit amount of the filter coefficient of the AIF given to the frame.

At this time, it is possible to estimate the lower limit as follows for the RD cost $J_A$ of the AIF.

$$J_A = D_A + \lambda (r_A + \rho_A) \quad \cdots \quad (6)$$

$$J_A \geqq D_R + \lambda (r_R + \beta \rho_R) \quad \cdots \quad (7)$$

A magnitude comparison between the lower limit of the RD cost of the AIF shown in the above expression and the RD cost of the IF using the fixed coefficient is performed. When the lower limit is a larger value, the RD cost of the AIF is set to be larger than the RD cost of the IF using the fixed coefficient. Because of this, it is possible to determine that it is difficult for the AIF to minimize the RD cost without the need to calculate the RD cost of the AIF. Accordingly, the RD cost calculation of the AIF is omitted. A value of $\beta$ is set to be given from the outside or separately set.

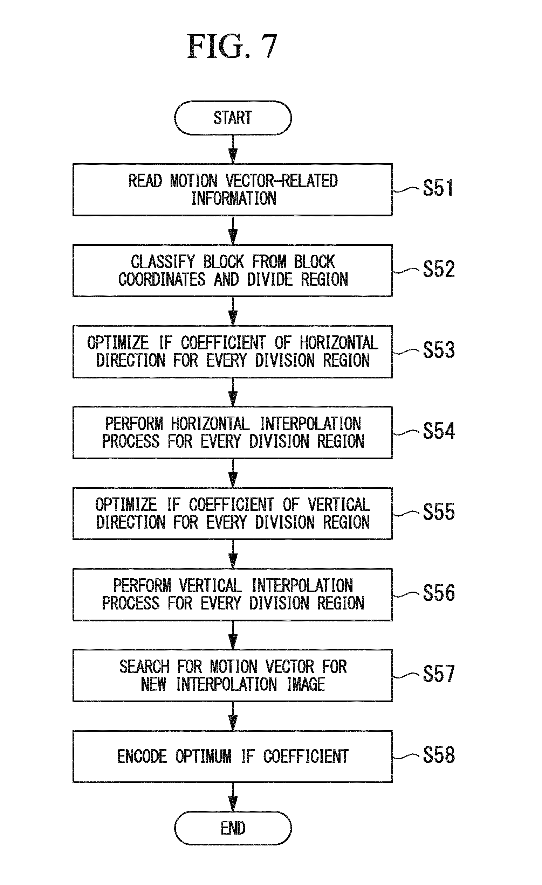

Next, a filter coefficient calculating algorithm of the RBAIF will be described with reference to FIG. 7. First, designated motion vector-related information is read (step S51). Subsequently, a frame is divided based on a predetermined norm (step S52). For example, a method of dividing a frame into two regions of an upper-side region and a lower-side region in a horizontal division operation or dividing a frame into two regions of a left-side region and a right-side region in a vertical division operation is applicable. At this time, information representing a division position is set to be separately given. Alternatively, it is possible to perform classification in units of blocks of motion compensation based on component information of a motion vector. Specifically, a region is divided by performing classification into two types in the form shown in Table 1 based on the horizontal component MVx and the vertical component MVy of the motion vector.

[Table 1]

| Block classification according to motion vector ($\gamma$ is threshold value given from outside) | |
|---|---|
| Motion vector | Block type |
| $|MV_x + MVy| \leqq \gamma$ | 1 |
| $\gamma < |MV_x + MV_y|$ | 2 |

Hereinafter, although a process of optimizing the filter coefficient using a separable filter as a target is shown, the procedure is similarly performed in a non-separable filter. In addition, hereinafter, IF coefficients are derived in the order of the IF coefficient of the horizontal direction and the IF coefficient of the vertical direction. Of course, the derivation order can be reversed.

Next, for each region, the filter coefficient is calculated from a region division result (step S53). As an IF coefficient for each fractional precision pixel of the horizontal direction, $w_{c_i}$ ($0 \leq c_i < 1$) in order to minimize prediction error energy $E(\alpha)$ of Expression (8) is obtained.

$$E(\alpha) = \sum_{x,y} \left( S_{x,y} - \sum_{c_i} w_{c_i} \cdot P_{\tilde{x}+c_i, \tilde{y}} \right)^2 \quad \cdots \cdots \quad (8)$$

Here, $\alpha$ ($1 \leq \alpha \leq 2$) represents a classified region number, S represents the original image, ^P (^ appears above P) is a decoded reference image, and x and y represent positions of horizontal and vertical directions in an image. In addition, -x = x + MVx-1/2 (- appears above x), where MVx represents a horizontal component of a previously obtained motion vector. In the vertical direction, -y = y + MVy (- appears above y), where MVy represents a vertical component of the motion vector. 1 is a tap length of the filter.

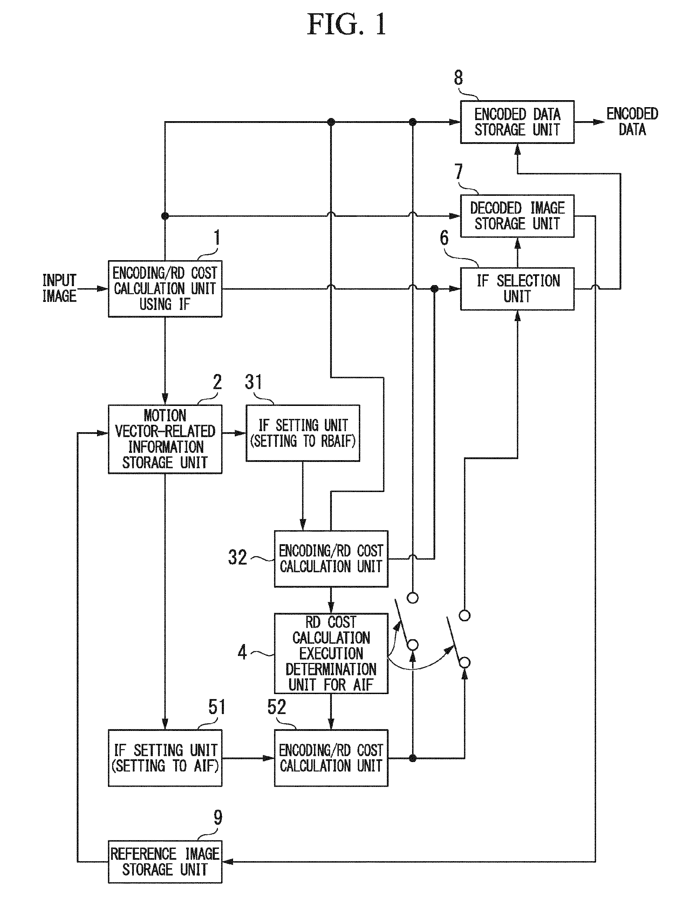

Next, fractional pixel interpolation of the horizontal direction (interpolation of a, b, and c in Fig. 1 of Non-Patent Document 2) is executed independently for each region within the frame using two types of obtained IF coefficients of the horizontal direction (step S54).

Next, the IF coefficient of the vertical direction is obtained (step S55). As an IF coefficient for each fractional precision pixel of the vertical direction, $w_{c_j}$ ($0 \leq c_j < 1$) in order to minimize prediction error energy $E(\alpha)$ of Expression (9) is obtained.

$$E(\alpha) = \sum_{x,y} \left( S_{x,y} - \sum_{c_j} w_{c_j} \cdot \hat{P}_{\widetilde{x}, \widetilde{y} + c_j} \right)^2 \qquad \cdots \cdots (9)$$

Here, $\alpha$ ($1 \leq \alpha \leq 2$) represents a classified region number, S represents the original image, ^P (^ appears above P) is an image interpolated in the horizontal direction in step S54, and x and y represent positions of horizontal and vertical directions in the image. In addition, -x = 4·(x + MVx) (- appears above x), where MVx represents a horizontal component of a rounded motion vector. In the vertical direction, -y = x + MVy-1/2 (- appears above y), where MVy represents a vertical component of the motion vector. 1 is a tap length of the filter.

Next, fractional pixel interpolation of the vertical direction (interpolation of d to o in Fig. 1 of Non Patent Document 2) is executed independently for each region within the frame using two types of obtained IF coefficients of the vertical direction (step S56). Accordingly, a motion vector is searched for a new interpolation image (step S57) and various IF coefficient groups are encoded (step S58).

A function of switching an IF coefficient described in this embodiment is applicable to a chrominance signal as well as a luminance signal. In addition, although the number of divisions is 2 here, it is possible to use an arbitrary number according to definition of classification.

Next, a configuration of the video encoding device having an IF selection function according to an embodiment of the present invention will be described with reference to Fig. 1. Fig. 1 is a block diagram illustrating a configuration of the same embodiment. The encoding/RD cost calculation unit 1 using the IF performs an encoding process when an IF using a fixed coefficient is used as the IF and calculates the RD cost. This RD cost is sent to an IF selection unit 6. In addition, encoded data obtained in the encoding process, a decoded image, and motion vector-related information are stored in an encoded data storage unit 8, a decoded image storage unit 7, and a motion vector-related information storage unit 2, respectively.

An IF setting unit 31 sets an RBAIF as an IF to be used in a subsequent encoding/RD cost calculation unit 32. The encoding/RD cost calculation unit 32 performs an encoding process when the RBAIF is used as the IF, and calculates the RD cost. The RD cost is sent to the IF selection unit 6. In addition, the encoded data obtained by the encoding process and the decoded image are sent to the encoded data storage unit 8 and the decoded image storage unit 7, respectively.

An RD cost calculation execution determination unit 4 for the AIF obtains a lower limit of the RD cost of the AIF based on an encoding distortion amount and a generated bit amount used in the RD cost calculation of the RBAIF and performs a magnitude comparison of the same lower limit and the RD cost of the IF using the fixed coefficient. When the lower limit is smaller, a process by an encoding/RD cost calculation unit 52 is performed. In addition, the RD cost, the encoded data obtained by the encoding process, and the decoded image are permitted to be transmitted to the IF selection unit 6, the encoded data storage unit 8, and the decoded image storage unit 7, respectively, as an output of the encoding/RD cost calculation unit 52.

An IF setting unit 51 sets an AIF as the IF to be used in the subsequent encoding/RD cost calculation unit 52. The encoding/RD cost calculation unit 52 performs an encoding process when the AIF is used as the IF and calculates the RD cost. In addition, the encoded data obtained by the encoding process and the decoded image are output.

The IF selection unit 6 selects an IF in order to minimize the RD cost based on a magnitude of the input RD cost. In addition, the encoded data is read from the encoded data storage unit 8 when the selected IF is used, and output as final encoded data. Further, when the selected IF is used, a decoded image is read from the decoded image storage unit 7 and stored in the reference image storage unit 9.

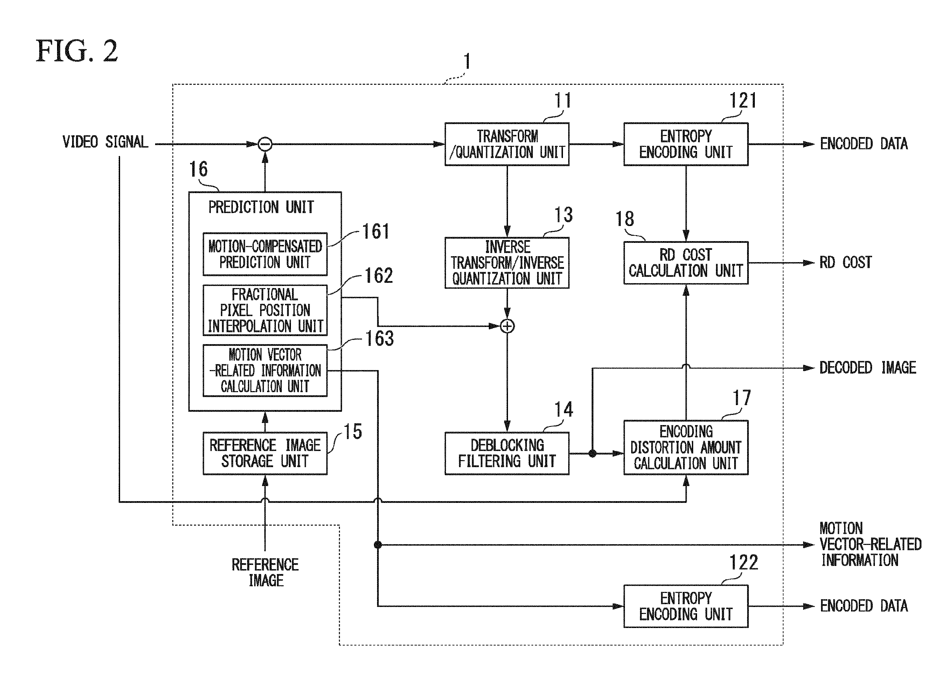

Next, a detailed configuration of the encoding/RD cost calculation unit 1 using the IF illustrated in Fig. 1 will be described with reference to Fig. 2. Fig. 2 is a block diagram illustrating the configuration of the encoding/RD cost calculation unit 1 using the IF when the motion vector-related information is calculated.

A transform/quantization unit 11 reads a prediction error signal as an input, performs an orthogonal transform process on the prediction error signal, quantizes a transform coefficient of orthogonal transform, and outputs a quantization index of the transform coefficient. An entropy encoding unit 121 reads the quantization index of the transform coefficient as an input, performs entropy encoding on the same quantization index, and outputs encoded data. An entropy encoding unit 122 reads motion vector-related information as the input, performs entropy encoding on the same motion vector-related information, and outputs encoded data.

An inverse transform/inverse quantization unit 13 reads the quantization index of the transform coefficient as the input, performs the inverse quantization of the quantization index, performs the inverse transforming process, and generates a decoded signal of a prediction error signal. A deblocking filtering unit 14 reads a signal generated by adding the decoded signal of the prediction error signal to a predicted image as an input, performs a filtering process on an addition result, and generates and outputs a decoded image. Also, as an example of the filtering process, a deblocking filter for use in the standard H.264 and the like are applicable.

A motion-compensated prediction unit 161 reads an input image, an interpolated image read from the motion-compensated prediction unit 161, and a reference image as the input, performs a motion estimation process using the reference image for the input image, and calculates motion vector-related information. A fractional pixel position interpolation unit 162 reads the reference image as the input, and generates a pixel value of the fractional pixel position using the IF using the fixed coefficient as the IF. A motion vector-related information calculation unit 163 reads the reference image and the motion vector-related information obtained by the fractional pixel position interpolation unit 162 as the input, and generates a predicted image for an input image based on a motion-compensated inter-frame prediction process using the reference image and the motion vector-related information.

An encoding distortion amount calculation unit 17 reads an input image and a decoded image output by the deblocking filtering unit 14 as the input, obtains a difference between the two images, and calculates an encoding distortion amount. RD cost calculation unit 18 calculates RD cost using a data amount of encoded data (a generated bit amount) generated by the prediction unit 16 and an encoding distortion amount calculated by the encoding distortion amount calculation unit 17 as the input.

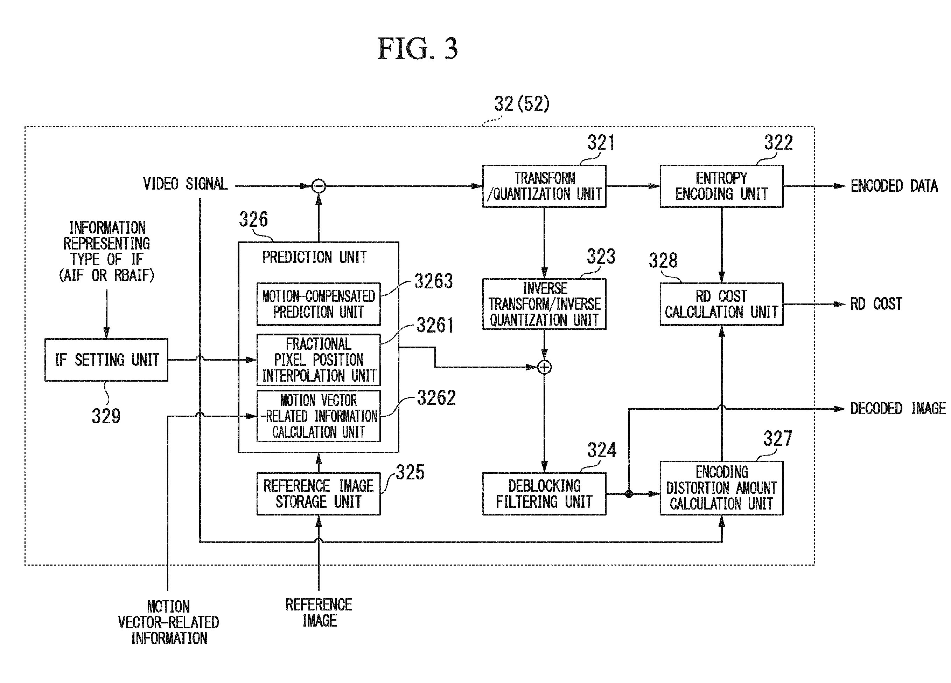

Next, detailed configurations of the encoding/RD cost calculation units 32 and 52 illustrated in Fig. 1 will be described with reference to Fig. 3. Fig. 3 is a block diagram illustrating the detailed configurations of the encoding/RD cost calculation units 32 and 52 of Fig. 1.

A transform/quantization unit 321 reads a prediction error signal as the input, performs an orthogonal transform process on the prediction error signal, quantizes a transform coefficient of orthogonal transform, and outputs a quantization index of the transform coefficient. An entropy encoding unit 322 reads a quantization index of the transform coefficient as the input, performs entropy encoding on the same quantization index, and outputs encoded data. The entropy encoding unit 322 reads motion vector-related information as the input, performs entropy encoding on the same motion vector-related information, and outputs encoded data.

An inverse transform/inverse quantization unit 323 reads the quantization index of the transform coefficient as the input, performs the inverse quantization of the quantization index, further performs the inverse transform process, and generates a decoded signal of a prediction error signal. A deblocking filtering unit 324 reads a signal obtained by adding the decoded signal of the prediction error signal to the predicted image as the input, performs a filtering process on an addition result, and generates and outputs a decoded image. A reference image storage unit 325 stores a reference image.

A fractional pixel position interpolation unit 3261 reads the reference image as the input, reads an input image, a reference image and motion vector-related information read by a motion vector-related information calculation unit 3262 as the input, and calculates a filter coefficient for the IF (the AIF or the RBAIF) set by the IF setting unit 329. A specific calculation method is the same as described above. Further, a pixel value of the fractional pixel position is generated using the calculated filter coefficient.

The motion vector-related information calculation unit 3262 reads motion vector-related information to be used in inter-frame prediction for the input image and the reference image from an outside and stores the read motion vector-related information.

A motion-compensated prediction unit 3263 reads a reference image, an interpolated image read from the fractional pixel position interpolation unit 3261, and the motion vector-related information read from the motion vector-related information calculation unit 3262 as the input, and generates a predicted image for the input image based on a motion-compensated inter-frame prediction process using the reference image and the motion vector-related information.

The encoding distortion amount calculation unit 327 reads the input image and the decoded image output by the deblocking filtering unit 324 as the input, obtains a difference between the two images, and calculates an encoding distortion amount. RD cost calculation unit 328 calculates RD cost using a data amount of encoded data (a generated bit amount) generated by the prediction unit 326 and an encoding distortion amount calculated by the encoding distortion amount calculation unit 327 as the input. An IF setting unit 329 sets a filter to be used as the IF.

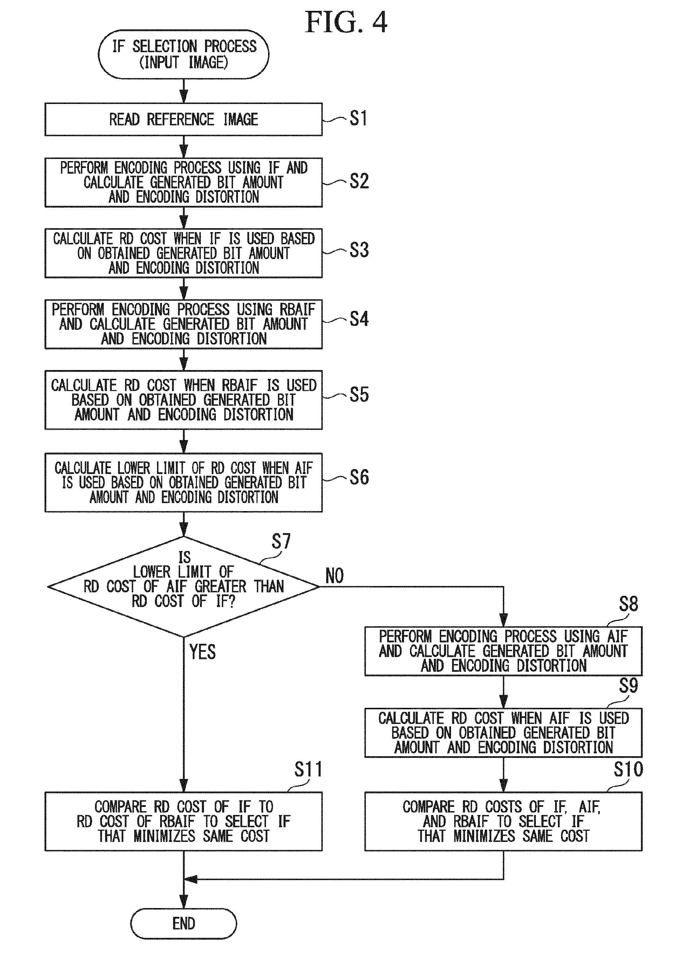

Next, a processing operation of the video encoding device illustrated in Fig. 1 will be described with reference to Fig. 4. Fig. 4 is a flowchart illustrating the processing operation of the video encoding device illustrated in Fig. 1. First, the encoding/RD cost calculation unit 1 using the IF reads the reference image to be used in inter-frame prediction (step S1), and performs an encoding process using an IF using a fixed coefficient as the IF and calculates a generated bit amount $R_I$ and encoding distortion $D_I$ (step S2). Accordingly, the encoding/RD cost calculation unit 1 using the IF calculates $J_1 = D_1 + \lambda R_1$ as the RD cost $J_I$ when the IF using the fixed coefficient has been used (step S3).

Next, the encoding/RD cost calculation unit 32 performs an encoding process using the RBAIF as the IF and calculates a generated bit amount $R_R$ and encoding distortion $D_R$ (step S4), and calculates $J_R = D_R + \lambda R_R$ as the RD cost $J_R$ when the RBAIF has been used (step S5). Here, the generated bit amount $R_R$ can be resolved as $R_R = r_R + \rho_R$.

Next, a value of a parameter $\beta$ is read and $D_R + \lambda (r_R + \beta \rho_R)$ is obtained as the lower limit of the RD cost of the AIF (step S6). The lower limit of the RD cost of the AIF obtained in step S6 is compared to the RD cost of the IF using the fixed coefficient obtained in step S2 (step S7). When the former is not greater than the latter, the process moves to step S8. Otherwise, the process moves to step S11.

Next, when the lower limit of the RD cost of the AIF is not greater than the RD cost of the IF, the encoding/RD cost calculation unit 52 performs the encoding process using the AIF as the IF and calculates a generated bit amount $R_A$ and encoding distortion $D_A$ (step S8), and calculates $J_A = D_A + \lambda R_A$ as the RD cost $J_A$ when the AIF has been used (step S9). The IF selection unit 6 compares the RD costs $J_I$, $J_A$, and $J_R$ of the IF using the fixed coefficient, the AIF, and the RBAIF, and selects the IF in order to minimize the same cost (step S10).

On the other hand, when the lower limit of the RD cost of the AIF is greater than the RD cost of the IF, the IF selection unit 6 compares the RD costs $J_I$ and $J_R$ of the IF using the fixed coefficient and the RBAIF, and selects the IF in order to minimize the same cost (step S11).

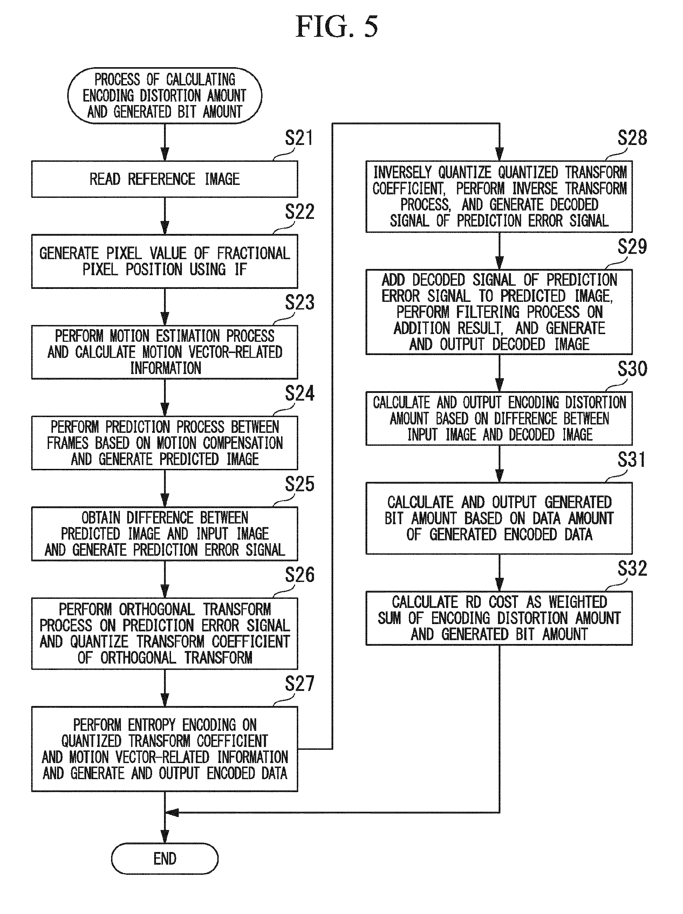

Next, a detailed operation of a process (step S2) of "performing the encoding process using the IF and calculates the generated bit amount and the encoding distortion" illustrated in Fig. 4 will be described with reference to Fig. 5. Fig. 5 is a flowchart illustrating a detailed operation in which the encoding/RD cost calculation unit 1 using the IF illustrated in Fig. 1 performs the process of "performing the encoding process using the IF and calculating the generated bit amount and the encoding distortion" illustrated in Fig. 4.

First, the encoding/RD cost calculation unit 1 using the IF reads the reference image to be used in inter-frame prediction (step S21). Accordingly, the fractional pixel position interpolation unit 162 reads the reference image as the input and generates a pixel value of a fractional pixel position using an IF using the fixed coefficient as the IF (step S22). Subsequently, the motion vector-related information calculation unit 163 reads the input image and the reference image as the input, performs a motion estimation process on the input image using the reference image, and calculates the motion vector-related information (step S23).

Next, the motion-compensated prediction unit 161 reads the reference image and the obtained motion vector-related information as the input, and generates a predicted image for the input image based on a motion-compensated inter-frame prediction process using the reference image and the obtained motion vector-related information (step S24). Subsequently, the predicted image and the input image are read as the input, a difference between the two images is obtained, and a prediction error signal is generated (step S25).

Next, the transform/quantization unit 11 reads the prediction error signal as the input, performs an orthogonal transform process on the prediction error signal, quantizes a transform coefficient of orthogonal transform, and outputs a quantization index of the transform coefficient (step S26). Subsequently, the entropy encoding unit 121 reads the quantization index of the transform coefficient and the motion vector-related information as the input, performs entropy encoding on the same quantization index and motion vector-related information, and outputs encoded data (step S27).

Next, the inverse transform/inverse quantization unit 13 reads the quantization index of the transform coefficient as the input, performs the inverse quantization of the same quantization index, further performs an inverse transform process, and generates a decoded signal of a prediction error signal (step S28). Subsequently, the generated decoded signal of the prediction error signal and the generated predicted image are read as the input and the two are added. Further, the filtering process on an addition result is performed by the deblocking filtering unit 14 and a decoded image is generated and output (step S29).

Next, the encoding distortion amount calculation unit 17 reads the input image and the output decoded image as the input, obtains a difference between the two images, and calculates an encoding distortion amount (step S30). Subsequently, the RD cost calculation unit 18 reads the generated encoded data as the input, calculates a generated bit amount based on a data amount of the same data (step S31), and calculates RD cost as a weighted sum of an encoding distortion amount and a generated bit amount (step S32).

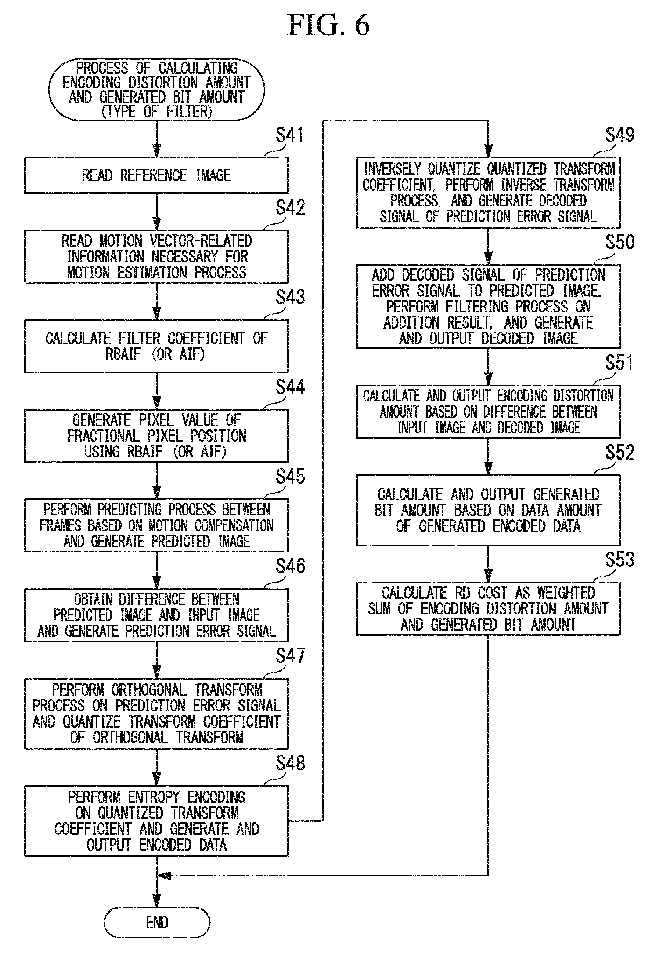

Next, a detailed operation of a process (steps S4 and S8) in which the encoding/RD cost calculation units 32 and 52 illustrated in Fig. 1 calculate a generated bit amount and encoding distortion illustrated in Fig. 4 will be described with reference to Fig. 6. Fig. 6 is a flowchart illustrating the detailed operation of the process in which the encoding/RD cost calculation units 32 and 52 illustrated in Fig. 1 calculate the generated bit amount and the encoding distortion illustrated in Fig. 4.

First, the encoding/RD cost calculation units 32 and 52 read the reference image to be used in inter-frame prediction (step S41). Accordingly, the motion vector-related information calculation unit 3362 reads the motion vector-related information necessary for the motion estimation process (step S42). Subsequently, the input image, the reference image, and the read motion vector-related information are read as the input, and a filter coefficient for the IF (the RBAIF or the AIF) given as the input of this process is calculated (step S43).

Next, the fractional pixel position interpolation unit 3261 reads the reference image as the input, and generates a pixel value of a fractional pixel position using the IF (the RBAIF or the AIF) given as the input of this process (step S44). Subsequently, the motion-compensated prediction unit 3263 reads the read motion vector-related information and the reference image as the input, and generates the predicted image for the input image based on the motion-compensated inter-frame prediction process (step S45). Accordingly, the predicted image and the input image are read as the input, the difference between the two images is obtained, and a prediction error signal is generated (step S46).

Next, the transform/quantization unit 321 reads the prediction error signal as the input, performs an orthogonal transform process on the prediction error signal, further quantizes a transform coefficient of the orthogonal transform, and outputs a quantization index of the transform coefficient (step S47). Subsequently, the entropy encoding unit 322 reads the quantization index of the transform coefficient and the motion vector-related information as the input, performs entropy encoding on the same quantization index and motion vector-related information, and outputs encoded data (step S48).

Next, the inverse transform/inverse quantization unit 323 reads the quantization index of the transform coefficient as the input, performs the inverse-quantization of the same quantization index, further performs an inverse transform process, and generates a decoded signal of a prediction error signal (step S49). Subsequently, the generated decoded signal of the prediction error signal and the generated predicted image are read as the input and the two are added. Further, the filtering process on an addition result is performed by the deblocking filtering unit 324 and a decoded image is generated and output (step S50).

Next, the encoding distortion amount calculation unit 327 reads the input image and the output decoded image as the input, obtains a difference between the two images, and calculates an encoding distortion amount (step S51). Subsequently, the RD cost calculation unit 328 reads the generated encoded data as the input, calculates a generated bit amount based on a data amount of the same data (step S52), and calculates RD cost as a weighted sum of an encoding distortion amount and a generated bit amount (step S53).

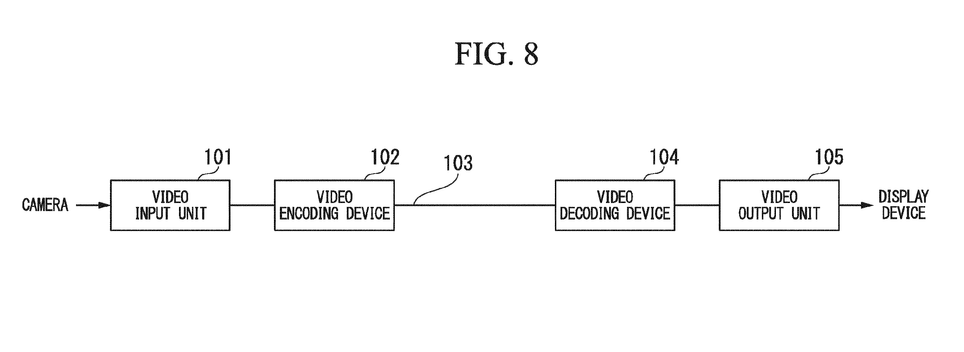

Next, a configuration of a video transmission system including the video encoding device illustrated in Fig. 1 will be described with reference to Fig. 8. Fig. 8 is a block diagram illustrating the configuration of the video transmission system. In Fig. 8, a video input unit 101 inputs a video captured by a camera or the like. Reference numeral 102 denotes the video encoding device illustrated in Fig. 1, and a video input by the video input unit 101 is encoded and transmitted. Reference numeral 103 denotes a transmission path through which data of the encoded video transmitted from the video encoding device 102 is transmitted. Reference numeral 104 denotes a video decoding device which receives data of the encoded video transmitted through the transmission path 103, decodes the data of the encoded video, and outputs the decoded video. A video output unit 105 outputs the video decoded in the video decoding device 104 to a display device or the like.

Next, an operation of the video transmission system illustrated in Fig. 8 will be described with reference to Fig. 8. The video encoding device 102 receives an input of video data via the video input unit 101 and performs encoding for every video frame. At this time, the IF selecting process illustrated in Fig. 1 is performed and the encoding process and the RD cost calculating process illustrated in Figs. 2 and 3 are performed. Accordingly, the video encoding device 102 transmits the encoded video data to the video decoding device 104 via the transmission path 103. The video decoding device 104 decodes the encoded video data and displays a video on the display device or the like via the video output unit 105.

As described above, because it is possible to determine whether RD cost calculation is necessary for an AIF having a small number of regions without calculating the same RD cost when an AIF having a different number of division regions is selected based on RD cost, there is an advantageous effect in that a calculation amount of the RD cost calculation can be reduced and a calculation amount used to select an AIF can be reduced.

In addition, the RBAIF process may be performed by recording a program used to implement the function of each processing unit in Fig. 1 on a computer-readable recording medium and causing a computer system to read and execute the program recorded on the recording medium.

The "computer system" used herein may include an operating system (OS) and/or hardware such as peripheral devices. In addition, the "computer-readable recording medium" refers to a storage device including a flexible disk, a magneto-optical disc, a read only memory (ROM), a portable medium such as a compact disc-ROM (CD-ROM), and a hard disk embedded in the computer system. Further, it is assumed that the "computer-readable recording medium" includes a medium for storing programs for a fixed period of time like a volatile memory (random access memory (RAM)) inside a computer system including a server and a client when a program is transmitted via a network such as the Internet or a communication line such as a telephone line.

In addition, the above-described program may be transmitted from a computer system storing the program in a storage device or the like to other computer systems via a transmission medium or transmission waves of the transmission medium. Here, the "transmission medium" used to transmit the program refers to a medium having a function of transmitting information like a network (communication network) such as the Internet or a communication line (communication wire) such as a telephone line. The above-described program may be used to implement some of the above-described functions. Further, the program may be a so-called differential file (differential program) capable of implementing the above-described functions through combination with a program already recorded on the computer system.

INDUSTRIAL APPLICABILITY

The video encoding device related to the present invention is applicable for a purpose of reducing a calculation amount required to select an IF while alleviating the degradation of encoding efficiency.

[Description of Reference Symbols]

| 1 | Encoding/RD cost calculation unit using IF |
|---|---|
| 2 | Motion vector-related information storage unit |
| 4 | RD cost calculation execution determination unit for AIF |
| 6 | IF selection unit |
| 7 | Decoded image storage unit |
| 8 | Encoded data storage unit |
| 9 | Reference image storage unit |
| 11 | Transform/quantization unit |
| 13 | Inverse transform/inverse quantization unit |
| 14 | Deblocking filtering unit |
| 15 | Reference image storage unit |
| 16 | Prediction unit |
| 17 | Encoding distortion amount calculation unit |
| 18 | RD cost calculation unit |
| 31 | IF setting unit |
| 32 | Encoding/RD cost calculation unit |
| 51 | IF setting unit |
| 52 | Encoding/RD cost calculation unit |
| 101 | Video input unit |
| 102 | Video encoding device |
| 103 | Transmission path |
| 104 | Video decoding device |
| 105 | Video output unit |
| 121 | Entropy encoding unit |
| 122 | Entropy encoding unit |
| 161 | Motion-compensated prediction unit |
| 162 | Fractional pixel position interpolation unit |
| 163 | Motion vector-related information calculation unit |
| 321 | Transform and quantization unit |
| 322 | Entropy encoding unit |
| 323 | Inverse transform/inverse quantization unit |
| 324 | Deblocking filtering unit |
| 325 | Reference image storage unit |
| 326 | Prediction unit |
| 327 | Encoding distortion amount calculation unit |
| 328 | RD cost calculation unit |
| 329 | IF setting unit |
| 3261 | Fractional pixel position interpolation unit |
| 3262 | Motion vector-related information calculation unit |
| 3263 | Motion-compensated prediction unit |

**Claims**

1. A video encoding device which performs motion-compensated inter-frame prediction corresponding to fractional pixel precision, wherein the video encoding device includes a fixed interpolation filter (IF) using a coefficient of a fixed value, an adaptive interpolation filter (AIF) which adaptively sets a coefficient of the IF, and a region-based adaptive interpolation filter (RBAIF) which adaptively sets the coefficient of the IF for each division region by dividing a frame into a plurality of regions as the IF which generates an interpolated pixel value of a fractional pixel position, the video encoding device comprising:

   a lower limit estimation unit which estimates a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and
   an IF selection unit which selects an optimum IF based on a comparison of bit amount/distortion cost functions of the fixed IF and the RBAIF when the lower limit is a value greater than the bit amount/distortion cost function for the fixed IF, and selects an optimum IF based on a comparison of bit amount/distortion cost functions of the fixed IF, the AIF, and the RBAIF only when the lower limit is less than or equal to the bit amount/distortion cost function for the fixed IF.

2. A video decoding device which decodes a video encoded by the video encoding device according to claim 1.

3. A video encoding method to be used in a video encoding device which performs motion-compensated inter-frame prediction corresponding to fractional pixel precision, wherein the video encoding device includes a fixed IF using a coefficient of a fixed value, an AIF which adaptively sets a coefficient of the IF, and an RBAIF which adaptively sets the coefficient of the IF for each division region by dividing a frame into a plurality of regions as the IF which generates an interpolated pixel value of a fractional pixel position, the video encoding method comprising:

   a lower limit estimation step of estimating a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and
   an IF selection step of selecting an optimum IF based on a comparison of bit amount/distortion cost functions of the fixed IF and the RBAIF when the lower limit is a value greater than the bit amount/distortion cost function for the fixed IF, and selecting an optimum IF based on a comparison of bit amount/distortion functions of the fixed IF, the AIF, and the RBAIF only when the lower limit is less than or equal to the bit amount/distortion cost function for the fixed IF.

4. A video decoding method of decoding a video encoded by the video encoding method according to claim 3.

5. A video encoding program used to cause a computer on a video encoding device which performs motion-compensated inter-frame prediction corresponding to fractional pixel precision, to execute a video encoding process, wherein the video encoding device includes a fixed IF using a coefficient of a fixed value, an AIF which adaptively sets a coefficient of the IF, and an RBAIF which adaptively sets the coefficient of the IF for each division region by dividing a frame into a plurality of regions as the IF which generates an interpolated pixel value of a fractional pixel position, the video encoding process comprising:

   a lower limit estimation step of estimating a lower limit of a bit amount/distortion cost function when the AIF is used based on a generated bit amount and an encoding distortion amount when the RBAIF is used upon selecting an optimum IF based on a bit amount/distortion cost function among the fixed IF, the AIF, and the RBAIF; and
   an IF selection step of selecting an optimum IF based on a comparison of bit amount/distortion cost functions of the fixed IF and the RBAIF when the lower limit is a value greater than the bit amount/distortion cost function for the fixed IF, and selecting an optimum IF based on a comparison of bit amount/distortion functions of the fixed IF, the AIF, and the RBAIF only when the lower limit is less than or equal to the bit amount/distortion cost function for the fixed IF.

6. A video decoding program which decodes a video encoded by the video encoding program according to claim 5.

# FIG. 1

## FIG. 2

VIDEO SIGNAL

16 PREDICTION UNIT
- 161 MOTION-COMPENSATED PREDICTION UNIT
- 162 FRACTIONAL PIXEL POSITION INTERPOLATION UNIT
- 163 MOTION VECTOR -RELATED INFORMATION CALCULATION UNIT

15 REFERENCE IMAGE STORAGE UNIT

REFERENCE IMAGE

11 TRANSFORM /QUANTIZATION UNIT

13 INVERSE TRANSFORM/INVERSE QUANTIZATION UNIT

14 DEBLOCKING FILTERING UNIT

121 ENTROPY ENCODING UNIT → ENCODED DATA

18 RD COST CALCULATION UNIT → RD COST

→ DECODED IMAGE

17 ENCODING DISTORTION AMOUNT CALCULATION UNIT

→ MOTION VECTOR-RELATED INFORMATION

122 ENTROPY ENCODING UNIT → ENCODED DATA

EP 2 709 363 A1

# FIG. 3

32(52)

VIDEO SIGNAL

INFORMATION REPRESENTING TYPE OF IF (AIF OR RBAIF)

IF SETTING UNIT — 329

326 PREDICTION UNIT

MOTION-COMPENSATED PREDICTION UNIT — 3263

FRACTIONAL PIXEL POSITION INTERPOLATION UNIT — 3261

MOTION VECTOR -RELATED INFORMATION CALCULATION UNIT — 3262

REFERENCE IMAGE STORAGE UNIT — 325

TRANSFORM /QUANTIZATION UNIT — 321

ENTROPY ENCODING UNIT — 322 → ENCODED DATA

INVERSE TRANSFORM/INVERSE QUANTIZATION UNIT — 323

RD COST CALCULATION UNIT — 328 → RD COST

→ DECODED IMAGE

DEBLOCKING FILTERING UNIT — 324

ENCODING DISTORTION AMOUNT CALCULATION UNIT — 327

MOTION VECTOR-RELATED INFORMATION

REFERENCE IMAGE

EP 2 709 363 A1

## FIG. 4

```
        ┌─────────────────────────┐
        │   IF SELECTION PROCESS   │
        │      (INPUT IMAGE)       │
        └─────────────────────────┘
                    │
                    ▼
        ┌─────────────────────────┐
        │   READ REFERENCE IMAGE   │──── S1
        └─────────────────────────┘
                    │
                    ▼
    ┌───────────────────────────────────┐
    │  PERFORM ENCODING PROCESS USING IF AND │
    │     CALCULATE GENERATED BIT AMOUNT     │──── S2
    │       AND ENCODING DISTORTION          │
    └───────────────────────────────────┘
                    │
                    ▼
    ┌───────────────────────────────────┐
    │ CALCULATE RD COST WHEN IF IS USED BASED │
    │   ON OBTAINED GENERATED BIT AMOUNT      │──── S3
    │       AND ENCODING DISTORTION           │
    └───────────────────────────────────┘
                    │
                    ▼
    ┌───────────────────────────────────┐
    │ PERFORM ENCODING PROCESS USING RBAIF   │
    │  AND CALCULATE GENERATED BIT AMOUNT    │──── S4
    │       AND ENCODING DISTORTION          │
    └───────────────────────────────────┘
                    │
                    ▼
    ┌───────────────────────────────────┐
    │ CALCULATE RD COST WHEN RBAIF IS USED   │
    │    BASED ON OBTAINED GENERATED BIT     │──── S5
    │   AMOUNT AND ENCODING DISTORTION       │
    └───────────────────────────────────┘
                    │
                    ▼
    ┌───────────────────────────────────┐
    │ CALCULATE LOWER LIMIT OF RD COST WHEN AIF │
    │  IS USED BASED ON OBTAINED GENERATED BIT  │──── S6
    │     AMOUNT AND ENCODING DISTORTION        │
    └───────────────────────────────────┘
                    │
                    ▼
              S7
          ◇ IS LOWER LIMIT OF ◇      NO
         ◇ RD COST OF AIF GREATER THAN ◇──────────────┐
          ◇ RD COST OF IF? ◇                          │
                    │                                  ▼
                   YES                      ┌────────────────────────────┐  S8
                    │                       │ PERFORM ENCODING PROCESS USING AIF │
                    │                       │ AND CALCULATE GENERATED BIT AMOUNT │
                    │                       │      AND ENCODING DISTORTION       │
                    │                       └────────────────────────────┘
                    │                                  │
                    │                                  ▼
                    │                       ┌────────────────────────────┐  S9
                    │                       │ CALCULATE RD COST WHEN AIF IS USED │
                    │                       │   BASED ON OBTAINED GENERATED BIT  │
                    │                       │   AMOUNT AND ENCODING DISTORTION   │
                    │                       └────────────────────────────┘
                    │                                  │
          S11       ▼                         S10      ▼
    ┌─────────────────────────┐         ┌─────────────────────────┐
    │  COMPARE RD COST OF IF TO  │         │  COMPARE RD COSTS OF IF, AIF,  │
    │  RD COST OF RBAIF TO SELECT IF │     │    AND RBAIF TO SELECT IF      │
    │  THAT MINIMIZES SAME COST   │         │   THAT MINIMIZES SAME COST     │
    └─────────────────────────┘         └─────────────────────────┘
                    │                                  │
                    ▼◄─────────────────────────────────┘
              ┌──────────┐
              │   END    │
              └──────────┘
```

17

# FIG. 5

PROCESS OF CALCULATING
ENCODING DISTORTION AMOUNT
AND GENERATED BIT AMOUNT

S21

READ REFERENCE IMAGE

S22

GENERATE PIXEL VALUE OF FRACTIONAL
PIXEL POSITION USING IF

S23

PERFORM MOTION ESTIMATION PROCESS
AND CALCULATE MOTION VECTOR-RELATED
INFORMATION

S24

PERFORM PREDICTION PROCESS BETWEEN
FRAMES BASED ON MOTION COMPENSATION
AND GENERATE PREDICTED IMAGE

S25

OBTAIN DIFFERENCE BETWEEN
PREDICTED IMAGE AND INPUT IMAGE
AND GENERATE PREDICTION ERROR SIGNAL

S26

PERFORM ORTHOGONAL TRANSFORM
PROCESS ON PREDICTION ERROR SIGNAL
AND QUANTIZE TRANSFORM COEFFICIENT
OF ORTHOGONAL TRANSFORM

S27

PERFORM ENTROPY ENCODING ON
QUANTIZED TRANSFORM COEFFICIENT
AND MOTION VECTOR-RELATED INFORMATION
AND GENERATE AND OUTPUT ENCODED DATA

S28

INVERSELY QUANTIZE QUANTIZED TRANSFORM
COEFFICIENT, PERFORM INVERSE TRANSFORM
PROCESS, AND GENERATE DECODED
SIGNAL OF PREDICTION ERROR SIGNAL

S29

ADD DECODED SIGNAL OF PREDICTION
ERROR SIGNAL TO PREDICTED IMAGE,
PERFORM FILTERING PROCESS ON
ADDITION RESULT, AND GENERATE
AND OUTPUT DECODED IMAGE

S30

CALCULATE AND OUTPUT ENCODING DISTORTION
AMOUNT BASED ON DIFFERENCE BETWEEN
INPUT IMAGE AND DECODED IMAGE

S31

CALCULATE AND OUTPUT GENERATED
BIT AMOUNT BASED ON DATA AMOUNT
OF GENERATED ENCODED DATA

S32

CALCULATE RD COST AS WEIGHTED
SUM OF ENCODING DISTORTION AMOUNT
AND GENERATED BIT AMOUNT

END

## FIG. 6

```
PROCESS OF CALCULATING
ENCODING DISTORTION AMOUNT
AND GENERATED BIT AMOUNT
(TYPE OF FILTER)
```

S41
READ REFERENCE IMAGE

S42
READ MOTION VECTOR-RELATED
INFORMATION NECESSARY FOR
MOTION ESTIMATION PROCESS

S43
CALCULATE FILTER COEFFICIENT OF
RBAIF (OR AIF)

S44
GENERATE PIXEL VALUE OF
FRACTIONAL PIXEL POSITION
USING RBAIF (OR AIF)

S45
PERFORM PREDICTING PROCESS BETWEEN
FRAMES BASED ON MOTION COMPENSATION
AND GENERATE PREDICTED IMAGE

S46
OBTAIN DIFFERENCE BETWEEN
PREDICTED IMAGE AND INPUT IMAGE
AND GENERATE PREDICTION ERROR SIGNAL

S47
PERFORM ORTHOGONAL TRANSFORM
PROCESS ON PREDICTION ERROR SIGNAL
AND QUANTIZE TRANSFORM COEFFICIENT
OF ORTHOGONAL TRANSFORM

S48
PERFORM ENTROPY ENCODING
ON QUANTIZED TRANSFORM
COEFFICIENT AND GENERATE AND
OUTPUT ENCODED DATA

S49
INVERSELY QUANTIZE QUANTIZED TRANSFORM
COEFFICIENT, PERFORM INVERSE TRANSFORM
PROCESS, AND GENERATE DECODED
SIGNAL OF PREDICTION ERROR SIGNAL

S50
ADD DECODED SIGNAL OF PREDICTION
ERROR SIGNAL TO PREDICTED IMAGE,
PERFORM FILTERING PROCESS ON
ADDITION RESULT, AND GENERATE
AND OUTPUT DECODED IMAGE

S51
CALCULATE AND OUTPUT ENCODING DISTORTION
AMOUNT BASED ON DIFFERENCE BETWEEN
INPUT IMAGE AND DECODED IMAGE

S52
CALCULATE AND OUTPUT GENERATED
BIT AMOUNT BASED ON DATA AMOUNT
OF GENERATED ENCODED DATA

S53
CALCULATE RD COST AS WEIGHTED
SUM OF ENCODING DISTORTION AMOUNT
AND GENERATED BIT AMOUNT

END

# FIG. 7

```
                    ┌─────────┐
                    │  START  │
                    └─────────┘
                         │
                         ▼
        ┌──────────────────────────────┐
        │  READ MOTION VECTOR-RELATED   │─── S51
        │         INFORMATION           │
        └──────────────────────────────┘
                         │
                         ▼
        ┌──────────────────────────────┐
        │  CLASSIFY BLOCK FROM BLOCK    │─── S52
        │  COORDINATES AND DIVIDE REGION│
        └──────────────────────────────┘
                         │
                         ▼
        ┌──────────────────────────────┐
        │ OPTIMIZE IF COEFFICIENT OF    │─── S53
        │ HORIZONTAL DIRECTION FOR      │
        │ EVERY DIVISION REGION         │
        └──────────────────────────────┘
                         │
                         ▼
        ┌──────────────────────────────┐
        │ PERFORM HORIZONTAL            │─── S54
        │ INTERPOLATION PROCESS FOR     │
        │ EVERY DIVISION REGION         │
        └──────────────────────────────┘
                         │
                         ▼
        ┌──────────────────────────────┐
        │ OPTIMIZE IF COEFFICIENT OF    │─── S55
        │ VERTICAL DIRECTION FOR        │
        │ EVERY DIVISION REGION         │
        └──────────────────────────────┘
                         │
                         ▼
        ┌──────────────────────────────┐
        │ PERFORM VERTICAL              │─── S56
        │ INTERPOLATION PROCESS FOR     │
        │ EVERY DIVISION REGION         │
        └──────────────────────────────┘
                         │
                         ▼
        ┌──────────────────────────────┐
        │ SEARCH FOR MOTION VECTOR FOR  │─── S57
        │ NEW INTERPOLATION IMAGE       │
        └──────────────────────────────┘
                         │
                         ▼
        ┌──────────────────────────────┐
        │ ENCODE OPTIMUM IF COEFFICIENT │─── S58
        └──────────────────────────────┘
                         │
                         ▼
                    ┌─────────┐
                    │   END   │
                    └─────────┘
```

# FIG. 8

EP 2 709 363 A1

<div align="center">

**INTERNATIONAL SEARCH REPORT**

</div>

| | International application No. |
|---|---|
| | PCT/JP2012/064996 |

**A. CLASSIFICATION OF SUBJECT MATTER**
*H04N7/32*(2006.01)i

According to International Patent Classification (IPC) or to both national classification and IPC

**B. FIELDS SEARCHED**

Minimum documentation searched (classification system followed by classification symbols)
H04N7/32

Documentation searched other than minimum documentation to the extent that such documents are included in the fields searched

| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | Matsuo,S.,et al, CE3: Region-based adaptive interpolation filter, Joint Collaborative Team on Video Coding (JCT-VC)of ITU-T SG16 WP3 and ISO/IEC JTC1/SC29/WG11 5th Meeting JCTVC-E078, 2011.03.18 | 2,4,6<br>1,3,5 |
| A | JP 2004-147328 A (Docomo Communications Laboratories U.S.A. Inc.), 20 May 2004 (20.05.2004), paragraphs [0007] to [0013], [0017], [0045] to [0056]; fig. 3<br>& US 2004/0076333 A1 | 1-6 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 August, 2012 (13.08.12) | Date of mailing of the international search report<br>21 August, 2012 (21.08.12) |
|---|---|
| Name and mailing address of the ISA/<br>   Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2012/064996 |

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2010/005808 A1  (Qualcomm Inc.),<br>14 January 2010 (14.01.2010),<br>paragraphs [0058] to [0066]<br>& JP 2011-527553 A        & US 2010/0002770 A1<br>& EP 2311263 A            & KR 10-2011-0026020 A<br>& CN 102084655 A | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011131126 A

**Non-patent literature cited in the description**

- **Y. VATIS ; B. EDLER ; D. NGUYEN ; J. OSTER-MANN.** Two-dimensional non-separable adaptive wiener interpolation filter for H.264/AVC. *ITU-TQ.6/SG16 VCEG, VCEG-Z17r1,* April 2005
- **S. WITTMANN ; T. WEDI.** Separable adaptive interpolation filter for video coding. *IEEE International Conference on image Processing,* 2008, 2500-2503

- Text description of joint model reference encoding methods and decoding concealment methods. **K. P. LIM ; G. SULLIVAN ; T. WIEGAND.** Technical Report R095. Joint Video Team (JVT) of ISO/IEC MPEG and ITU-T VCEG, January 2006